# EUROPÄISCHE PATENTANMELDUNG

(11) **EP 4 840 281 A1**
(43) Veröffentlichungstag der Anmeldung: **18.11.2026**
(21) Anmeldenummer: 26174524.4
(22) Anmeldetag: 24.04.2026
(51) Int. Cl.: A01C 7/20, A01C 5/06

(54) **VERFAHREN ZUR REGELUNG EINER KONSTANTEN ABLAGETIEFE FÜR KÖRNIGES SAATGUT UND/ODER FÖRDERGUT IN EINEN FELDBODEN MITHILFE EINER SÄMASCHINE**

(30) Priorität: 12.05.2025 DE 102025118054
(71) Anmelder: Amazonen-Werke H. Dreyer SE & Co. KG, 49205 Hasbergen (DE)
(72) Erfinder: Rüsse, Mario, 49205 Hasbergen-Gaste (DE)

(57) **Zusammenfassung**

Die Offenlegungsschrift betrifft ein Verfahren zur Regelung einer konstanten Ablagetiefe für körniges Saatgut und/oder Fördergut in einen Feldboden mithilfe einer Sämaschine (1) und einen Computer, ein Computersystem oder ein Computernetzwerk, welche dazu eingerichtet sind, das genannte Verfahren auszuführen. Ferner betrifft die Offenlegungsschrift ein Computerprogramm, umfassend Befehle, die bei der Ausführung des Programms durch einen Computer diesen veranlassen, das genannte Verfahren auszuführen. Ferner betrifft die Offenlegungsschrift eine Sämaschine (1) zum Ausbringen von körnigem Saatgut und/oder Fördergut in einen Feldboden.

## Beschreibung

Die Erfindung betrifft ein Verfahren zur Regelung einer konstanten Ablagetiefe für körniges Saatgut und/oder Fördergut in einen Feldboden mithilfe einer Sämaschine. Ferner betrifft die Erfindung einen Computer, ein Computersystem oder ein Computernetzwerk, welche dazu eingerichtet sind, das genannte Verfahren auszuführen. Auch betrifft die Erfindung ein Computerprogramm, umfassend Befehle, die bei der Ausführung des Programms durch einen Computer diesen veranlassen, das genannte Verfahren auszuführen. Außerdem betrifft die Erfindung eine Sämaschine zum Ausbringen von körnigem Saatgut und/oder Fördergut in einen Feldboden.

Heutzutage können Nutzer von Sämaschinen einen Solldruck bzw. einen Schardruck einzustellen, wofür ein Drucksensor benötigt wird. Darüber hinaus können Nutzer von Sämaschinen eine Aufstandskraft oder ein Schargewicht vorgeben, wofür zusätzlich ein oder mehrere Kraftsensoren benötigt werden.

Beide Größen können von einer Sämaschine geregelt werden. Die Kraftregelung hat den Vorteil, dass unabhängig von den vorherrschenden Bodenverhältnissen die Aufstandskraft konstant gehalten werden kann. Somit soll der Bodenschluss und die Ablagetiefe für körniges Saatgut und/oder Fördergut konstant gehalten werden.

Da jedoch die Böden bzw. deren Eigenschaften je nach Region oder auch innerhalb eines Feldes variieren, gelangt die Kraftregelung an ihre Grenzen, da mit dieser die Regelung der Aufstandskraft auf "hartem" Feldboden träge ist, während sie auf einem "weichen" Feldboden überschwingt.

Vor diesem Hintergrund ist es daher Aufgabe der vorliegenden Erfindung, ein Verfahren zur Regelung einer konstanten Ablagetiefe für körniges Saatgut und/oder Fördergut in einen Feldboden sowie eine Sämaschine zum Ausbringen von körnigem Saatgut und/oder Fördergut in einen Feldboden anzugeben, welches bzw. welche ein Überschwingen und/oder ein aperiodisches Einschwingen unterbindet und/oder die Einhaltung der korrekten Ablagetiefe von körnigem Saatgut und/oder Fördergut verbessert.

Diese Aufgabe wird durch die Merkmale der unabhängigen Ansprüche gelöst. Weitere vorteilhafte Weiterbildungen sind Gegenstand der Unteransprüche.

Ein erster Aspekt der vorliegenden Erfindung umfasst ein Verfahren zur Regelung einer konstanten Ablagetiefe für körniges Saatgut und/oder Fördergut in einen Feldboden, z. B. mithilfe einer Sämaschine.

Dabei weist das Verfahren als einen Schritt ein Einstellen einer Ablagetiefe für Saatgut und/oder Fördergut in einen Feldboden auf. Das Einstellen kann beispielsweise ein Nutzer an einem Eingabegerät, wie z. B. einem Eingabebildschirm, einer Sämaschine als Wert für das zu säende körnige Saatgut und/oder Fördergut setzen.

Ferner weist das Verfahren ein Einstellen einer Aufstandskraft zur Beaufschlagung eines Säschars einer Sämaschine und/oder zur Einhaltung der eingestellten Ablagetiefe für Saatgut und/oder Fördergut in einen Feldboden auf. Mithilfe der Aufstandskraft kann die Ablagetiefe bei sich verändernden Bodenverhältnissen und/oder -beschaffenheiten konstant gehalten werden. Das Einstellen kann beispielsweise ein Nutzer an einem Eingabegerät, wie z. B. einem Eingabebildschirm, einer Sämaschine als Wert für das zu säende körnige Saatgut und/oder Fördergut setzen.

Ein weiterer Schritt des Verfahren umfasst ein Erfassen eines hydraulischen oder pneumatischen Schardrucks auf einen Säschar einer Sämaschine zur Erzeugung der eingestellten Aufstandskraft und/oder zur Einhaltung der eingestellten Ablagetiefe für Saatgut und/oder Fördergut in einen Feldboden.

Dabei kann der Schardruck mithilfe eines Drucksensors einer Sämaschine erfasst werden. Auch kann der Drucksensor eingerichtet und ausgebildet sein, den hydraulischen oder pneumatischen Schardruck, der von einer Hydraulik- oder Pneumatikversorgung einer Sämaschine erzeugt und für die Schardruckeinrichtung zur Verfügung gestellt werden kann und/oder auf einen Säschar einer Sämaschine einwirken kann, zu erfassen. Ferner kann der Drucksensor innerhalb einer Versorgungsleitung einer Sämaschine angeordnet und/oder mit einer Versorgungsleitung einer Sämaschine verbunden sein, welche von einer Hydraulik- oder Pneumatikversorgung einer Sämaschine zu einer Schardruckeinrichtung einer Sämaschine für die Erzeugung der Aufstandskraft führen kann. Bei der Versorgungsleitung kann es sich um eine Fluidleitung handeln.

Zusätzlich weist das Verfahren als Verfahrensschritt ein Erfassen einer Aufstandskraft, mit welcher ein Säschar einer Sämaschine tatsächlich beaufschlagt ist und/oder mit welcher die eingestellte Ablagetiefe für Saatgut und/oder Fördergut in einen Feldboden eingehalten und/oder kontrolliert werden kann, auf. Die Aufstandskraft kann mithilfe eines Kraftsensors einer Sämaschine erfasst werden. Gegen den oder am Kraftsensor kann eine Rolle, wie z. B. eine Tragrolle oder eine Druck- oder Tiefenführungsrolle einer Sämaschine, drücken oder anliegen. Ferner kann der Kraftsensor eingerichtet und ausgebildet sein, die Aufstandskraft, die vom Feldboden auf eine Rolle und/oder auf einen Säschar einer Sämaschine einwirkt, zu erfassen.

Des Weiteren weist das Verfahren ein Bilden eines Verhältnisses von erfasstem Schardruck zu erfasster Aufstandskraft auf.

Als weiteren Schritt umfasst das Verfahren ein Regeln des Schardrucks anhand des gebildeten Verhältnisses.

Sowohl das Bilden des Verhältnisses als auch das Regeln anhand des gebildeten Verhältnisses erlaubt eine zeitlich schnellere Anpassung des Schardrucks an die geforderte bzw. eingestellte Aufstandskraft. Somit kann ein Überschwingen und/oder ein aperiodisches Einschwingen unterbunden und/oder die Einhaltung der korrekten Ablagetiefe von körnigem Saatgut und/oder Fördergut verbessert werden. Ferner kann in der Folge im Vergleich zum Stand der Technik über größere Strecken auf einem Feld die korrekte Ablagetiefe eingehalten werden und folglich der Ertrag gesteigert werden.

Des Weiteren kann anhand des Verhältnisses das Verfahren als Schritt ein Klassifizieren von mindestens einer Eigenschaft des Feldbodens, in welchem Saatgut und/oder Fördergut bei der eingestellten Ablagetiefe eingebracht wird, umfassen. Dabei kann das Klassifizieren von mindestens einer Eigenschaft des Feldbodens die mechanischen Eigenschaften des Feldbodens betreffen.

Auch kann das Klassifizieren von mindestens einer Eigenschaft des Feldbodens ein Unterscheiden des Feldbodens in einen weichen, in einen harten und in einen mittleren Feldboden, der zwischen dem weichen und harten Feldboden angesiedelt ist, umfassen. Zudem kann beim Unterscheiden von einem erfassten, hohen Schardruck und einer erfassten, hohen Aufstandskraft auf einen mittleren Feldboden, der zwischen einem weichen und harten Feldboden angesiedelt ist, geschlossen werden. Zudem ist es möglich, dass beim Unterscheiden von einem erfassten, geringem Schardruck und einer erfassten, geringen Aufstandskraft auf einen mittleren Feldboden, der zwischen einem weichen und harten Feldboden angesiedelt ist, geschlossen wird. Außerdem kann beim Unterscheiden von einem erfassten, hohen Schardruck und einer erfassten, geringen Aufstandskraft auf einen harten Feldboden geschlossen werden. Ferner kann beim Unterscheiden von einem erfassten, geringen Schardruck und einer erfassten, hohen Aufstandskraft auf einen weichen Feldboden geschlossen werden.

Das Unterscheiden in einen weichen, mittleren und harten Boden kann dahingehend verstanden werden, dass bei einem weichen Boden der Schardruck geringer ist als bei einem mittleren und einem harten Boden, um die eingestellte Aufstandskraft und/oder die eingestellte Ablagetiefe zu erreichen. Umgekehrt ist es analog.

Des Weiteren kann das Klassifizieren ein Auslesen eines Parametersatzes zur Regelung des Schardrucks und/oder zur Regelung einer Schardruckeinrichtung einer Sämaschine für die geforderte Aufstandskraft umfassen, um für den in Bearbeitung stehenden und/oder klassifizierten Feldboden, z. B. mit seiner mindestens einen Eigenschaft, eine optimale Druckversorgung durch eine Schardruckeinrichtung einer Sämaschine zu gewährleisten. Somit können für jeden Feldboden (wie z. B. weich, mittel, hart) die Auslenkungen eines Säschars einer Sämaschine minimierbar sein oder minimiert werden, wodurch das dynamische Auslenkverhalten des Säschars hinsichtlich eines Überschwingens und/oder hinsichtlich eines aperiodischen Einschwingens, z. B. beim Übergang von einem Feldboden mit seinen spezifischen Eigenschaften, beispielsweise hart, zu einem anderen Feldboden mit seinen weiteren spezifischen Eigenschaften, beispielsweise weich, verbessert werden kann. Folglich kann die eingestellte Ablagetiefe für Saatgut und/oder Fördergut in den in Bearbeitung stehenden und/oder klassifizierten Feldboden sichergestellt werden.

Des Weiteren kann das Verfahren ein Überspielen der mindestens einen klassifizierten Eigenschaft des Feldbodens und/oder des ausgelesenen Parametersatzes an eine Steuerungs- oder Regelungseinrichtung einer Sämaschine umfassen. Dadurch kann die Steuerungs- oder Regelungseinrichtung einer Sämaschine mithilfe einer Schardruckeinrichtung einer Sämaschine den hydraulischen oder pneumatischen Schardruck auf einen Säschar einer Sämaschine zur Erzeugung der eingestellten Aufstandskraft und/oder zur Einhaltung der eingestellten Ablagetiefe für Saatgut und/oder Fördergut in einen Feldboden einstellen oder nachstellen.

Ferner kann das Verfahren so ausgebildet sein, dass dieses von Neuem beginnt. Zusätzlich oder alternativ kann das Verfahren nach Ablauf eines definierbaren Zeitraums neustarten. Ferner kann zusätzlich oder alternativ der definierbare Zeitraum 0,1 Sekunden bis 5 Sekunden oder 1 oder 3 Sekunden betragen. Dadurch kann eine permanente Anpassung des Schardrucks auf die eingestellte Aufstandskraft erfolgen.

Ein zweiter Aspekt der vorliegenden Erfindung umfasst einen Computer, ein Computersystem oder ein Computernetzwerk.

Es wird ausdrücklich darauf hingewiesen, dass die Merkmale des Verfahrens, wie sie unter dem ersten Aspekt erwähnt werden, einzeln oder miteinander kombinierbar bei dem Computer, Computersystem oder Computernetzwerk Anwendung finden können.

Ein Computer, Computersystem oder Computernetzwerk, ist dazu eingerichtet, lokal oder nicht-lokal das Verfahren nach dem ersten Aspekt auszuführen.

Ein dritter Aspekt der vorliegenden Erfindung umfasst ein Computerprogramm.

Es wird ausdrücklich darauf hingewiesen, dass die Merkmale des Verfahrens, wie sie unter dem ersten Aspekt erwähnt werden, einzeln oder miteinander kombinierbar bei dem Computerprogramm Anwendung finden können.

Ein Computerprogramm, umfasst Befehle, die bei der Ausführung des Programms durch einen Computer diesen veranlassen, das Verfahren nach dem ersten Aspekt auszuführen.

Ein vierter Aspekt der vorliegenden Erfindung umfasst eine Sämaschine zum Ausbringen von körnigem Saatgut und/oder Fördergut in einen Feldboden.

Es wird ausdrücklich darauf hingewiesen, dass die Merkmale des zweiten und/oder dritten Aspekts einzeln oder miteinander kombinierbar bei der Sämaschine Anwendung finden können.

Eine Sämaschine zum Ausbringen von körnigem Saatgut und/oder Fördergut in einen Feldboden umfasst einen Computer, ein Computersystem oder ein Computernetzwerk nach dem zweiten Aspekt. Bei der Sämaschine kann es sich um eine Sämaschine für die Volumensaat oder für die Einzelkornsaat handeln.

Alternativ kann die Sämaschine eine Schardruckeinrichtung zur Erzeugung einer Aufstandskraft auf einen Säschar der Sämaschine aufweisen. Außerdem kann die Sämaschine eine Steuerungs- oder Regelungseinrichtung zum Regeln der Aufstandskraft mithilfe der Schardruckeinrichtung und/oder mithilfe einer Hydraulik- oder Pneumatikversorgung der Sämaschine aufweisen. Dabei kann die Steuerungs- oder Regelungseinrichtung den Computer, das Computersystem oder das Computernetzwerk nach dem zweiten Aspekt umfassen.

Zudem kann die Sämaschine einen Säschar zum Öffnen eines Feldbodens und zum Einbringen von Saatgut und/oder Fördergut aufweisen.

Auch kann die Sämaschine einen Drucksensor zur Erfassung eines hydraulischen oder pneumatischen Schardrucks umfassen.

Ferner kann vorgesehen sein, dass die Sämaschine eine Hydraulik- oder Pneumatikversorgung aufweist, mit welcher ein Schardruck erzeugbar und zur Verfügung stellbar ist, um einen Säschar der Sämaschine mithilfe einer Schardruckeinrichtung der Sämaschine in den Feldboden zu drücken.

Weiterhin ist es denkbar, dass die Sämaschine eine Versorgungsleitung umfasst, mit welcher der Drucksensor verbunden ist. Dabei kann die Versorgungsleitung die Hydraulik- oder Pneumatikversorgung mit einer Schardruckeinrichtung der Sämaschine fluidkommunizierend verbinden. Bei der Versorgungsleitung kann es sich um eine Fluidleitung handeln.

Des Weiteren kann die Sämaschine einen Kraftsensor aufweisen, mit welchem eine Aufstandskraft gegen eine Rolle, wie z. B. eine Tragrolle oder eine Druck- oder Tiefenführungsrolle, der Sämaschine und/oder gegen einen Säschar der Sämaschine erfassbar ist.

Auch kann die Sämaschine eine Rolle aufweisen, mit deren Hilfe eine Aufstandskraft, die auch auf einen Säschar der Sämaschine einwirken kann, an einen Kraftsensor der Sämaschine geleitet oder übertragen wird, sodass vom Kraftsensor die Aufstandskraft erfassbar ist.

Nachstehend wird die Erfindung anhand eines Ausführungsbeispiels in Verbindung mit einer zugehörigen Zeichnung näher erläutert. Hierbei zeigt schematisch:

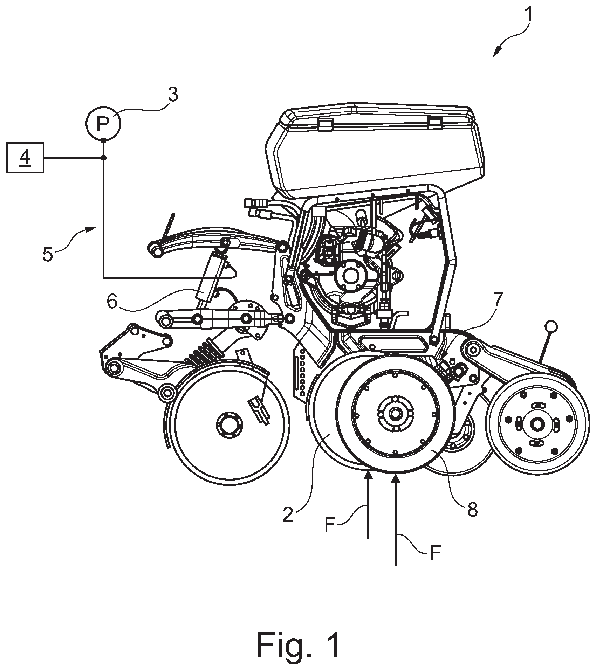

- **Fig. 1**: eine Seitenansicht auf eine Sämaschine zum Ausbringen von körnigem Saatgut und/oder Fördergut in einen Feldboden.

Figur 1 zeigt eine Seitenansicht auf eine Sämaschine 1 zum Ausbringen von körnigem Saatgut und/oder Fördergut in einen Feldboden.

Die Sämaschine 1 hat einen Säschar 2 zum Öffnen eines Feldbodens und zum Einbringen von Saatgut und/oder Fördergut.

Ferner die Sämaschine 1 einen Drucksensor 3 zur Erfassung eines hydraulischen oder pneumatischen Schardrucks P.

Zudem zeigt Figur 1, dass die Sämaschine 1 eine Hydraulik- oder Pneumatikversorgung 4 umfasst, mit welcher ein Schardruck P erzeugbar und zur Verfügung stellbar ist, um einen Säschar 2 der Sämaschine 1 mithilfe einer Schardruckeinrichtung 6 der Sämaschine 1 in den Feldboden zu drücken.

Außerdem zeigt Figur 1, dass die Sämaschine 1 eine Versorgungsleitung 5 hat, mit welcher der Drucksensor 3 verbunden ist, wobei die Versorgungsleitung 5 die Hydraulik- oder Pneumatikversorgung 4 mit einer Schardruckeinrichtung 6 der Sämaschine fluidkommunizierend verbindet.

Ferner hat gemäß Figur 1 die Sämaschine 1 einen Kraftsensor 7, mit welchem eine Aufstandskraft F gegen eine Rolle 8, wie z. B. eine Tragrolle oder eine Druck- oder Tiefenführungsrolle, der Sämaschine 1 und somit auch gegen einen Säschar 2 der Sämaschine 1 erfassbar ist.

Wie angedeutet hat also die Sämaschine eine Rolle 8, mit deren Hilfe die Aufstandskraft F, die auf den Säschar 2 einwirkt, an den Kraftsensor 7 geleitet oder übertragen wird, sodass vom Kraftsensor 7 die Aufstandskraft F erfassbar ist.

Des Weiteren hat die Sämaschine 1 eine Schardruckeinrichtung 6 zur Erzeugung der Aufstandskraft F auf den Säschar 2.

Außerdem umfasst die Sämaschine 1 eine Regelungseinrichtung (nicht dargestellt) zum Regeln der Aufstandskraft F mithilfe der Schardruckeinrichtung 6 und/oder mithilfe der Hydraulik- oder Pneumatikversorgung 4. Dabei umfasst die Regelungseinrichtung einen Computer, welche dazu eingerichtet ist, lokal oder nicht-lokal nachstehendes Verfahren zur Regelung einer konstanten Ablagetiefe für körniges Saatgut und/oder Fördergut in einen Feldboden mithilfe der Sämaschine 1 auszuführen.

Genanntes Verfahren umfasst als Verfahrensschritt ein Einstellen einer Ablagetiefe für Saatgut und/oder Fördergut in einen Feldboden. Das Einstellen kann beispielsweise ein Nutzer an einem Eingabegerät, wie z. B. einem Eingabebildschirm, einer Sämaschine 1 als Wert für das zu säende körnige Saatgut und/oder Fördergut setzen.

Ferner weist das Verfahren als weiteren Schritt ein Einstellen einer Aufstandskraft F zur Beaufschlagung des Säschars 2 auf. Dies kann ebenfalls beispielsweise über ein Eingabegerät, wie einen Bildschirm, von einem Nutzer der Sämaschine durchgeführt werden.

Anschließend umfasst das Verfahren ein Erfassen des hydraulischen oder pneumatischen Schardrucks P auf den Säschar 2 zur Erzeugung der eingestellten Aufstandskraft F. Dabei wird der Schardruck P mithilfe des Drucksensors 3 erfasst. Der Drucksensor 3 ist eingerichtet und ausgebildet, den hydraulischen oder pneumatischen Schardruck P, der von der Hydraulik- oder Pneumatikversorgung 4 erzeugt und für die Schardruckeinrichtung 6 zur Verfügung gestellt wird und auf den Säschar 2 einwirkt, zu erfassen. Wie angedeutet, ist der Drucksensor 3 mit der Versorgungsleitung 5 verbunden, welche von der Hydraulik- oder Pneumatikversorgung 4 zur Schardruckeinrichtung 6 für die Erzeugung der Aufstandskraft F führt.

Des Weiteren umfasst das Verfahren ein Erfassen der Aufstandskraft F, mit welcher der Säschar 2 tatsächlich beaufschlagt ist. Die Aufstandskraft F wird mithilfe des Kraftsensors 7 erfasst, gegen den die Rolle 8 drückt und der eingerichtet und ausgebildet ist, die Aufstandskraft F, die vom Feldboden auf die Rolle 8 und auch auf den Säschar 2 einwirkt, zu erfassen.

Im Anschluss weist das Verfahren als weiteren Schritt ein Bilden eines Verhältnisses von erfasstem Schardruck P zu erfasster Aufstandskraft F auf. Anschließend wird in einem zusätzlich Schritt der Schardruck P anhand des gebildeten Verhältnisses geregelt.

Anhand des Verhältnisses werden Eigenschaften des Feldbodens, in welchem Saatgut und/oder Fördergut bei der eingestellten Ablagetiefe eingebracht wird, klassifiziert. Dieses Klassifizieren betrifft die mechanischen Eigenschaften des Feldbodens.

Im Grunde genommen umfasst das Klassifizieren von Eigenschaften des Feldbodens ein Unterscheiden des Feldbodens in einen weichen, in einen harten und in einen mittleren Feldboden, der zwischen dem weichen und harten Feldboden angesiedelt ist.

Dabei wird beim Unterscheiden von einem erfassten, hohen Schardruck P und einer erfassten, hohen Aufstandskraft F auf einen mittleren Feldboden, der zwischen einem weichen und harten Feldboden angesiedelt ist, geschlossen.

Ferner wird beim Unterscheiden von einem erfassten, geringem Schardruck P und einer erfassten, geringen Aufstandskraft F auf einen mittleren Feldboden, der zwischen einem weichen und harten Feldboden angesiedelt ist, geschlossen.

Zudem wird beim Unterscheiden von einem erfassten, hohen Schardruck P und einer erfassten, geringen Aufstandskraft F auf einen harten Feldboden geschlossen.

Auch wird beim Unterscheiden von einem erfassten, geringen Schardruck P und einer erfassten, hohen Aufstandskraft F auf einen weichen Feldboden geschlossen.

Somit kann also der in Bearbeitung stehende Boden klassifiziert werden.

Des Weiteren umfasst das Klassifizieren ein Auslesen eines Parametersatzes zur Regelung des Schardrucks P bzw. zur Regelung der Schardruckeinrichtung 6 für die geforderte Aufstandskraft F, um für den in Bearbeitung stehenden und/oder klassifizierten Feldboden mit seinen Eigenschaften eine optimale Druckversorgung durch die Schardruckeinrichtung 6 zu gewährleisten. Somit können für jeden Feldboden die Auslenkungen des Säschars 2 minimiert werden, wodurch das dynamische Auslenkverhalten des Säschars 2 hinsichtlich eines Überschwingens oder hinsichtlich eines aperiodischen Einschwingens, z. B. beim Übergang von einem Feldboden mit seinen spezifischen Eigenschaften zu einem anderen Feldboden mit seinen weiteren spezifischen Eigenschaften, verbessert werden kann. Ferner kann dadurch die eingestellte Ablagetiefe für Saatgut und/oder Fördergut in den in Bearbeitung stehenden und klassifizierten Feldboden sichergestellt werden.

Ferner weist das Verfahren ein Überspielen der klassifizierten Eigenschaften des Feldbodens und des ausgelesenen Parametersatzes an die Regelungseinrichtung der Sämaschine 1 auf, wodurch die Regelungseinrichtung mithilfe der Schardruckeinrichtung 6 den hydraulischen oder pneumatischen Schardruck P auf den Säschar 2 zur Erzeugung der eingestellten Aufstandskraft F einstellt bzw. nachstellt.

Das oben vorgestellte Verfahren startet nach Ablauf eines definierbaren Zeitraums, der 0,5 Sekunden oder 1 Sekunde beträgt, von Neuem. Dadurch kann eine permanente Anpassung des Schardrucks P auf die eingestellte Aufstandskraft F erfolgen.

### Bezugszeichenliste

- 1: Sämaschine
- 2: Säschar
- 3: Drucksensor
- 4: Hydraulik- oder Pneumatikversorgung
- 5: Versorgungsleitung
- 6: Schardruckeinrichtung
- 7: Kraftsensor
- 8: Rolle

- F: Aufstandskraft
- P: Schardruck

## Patentansprüche

1. Verfahren zur Regelung einer konstanten Ablagetiefe für körniges Saatgut und/oder Fördergut in einen Feldboden aufweisend:
- Einstellen einer Ablagetiefe für Saatgut und/oder Fördergut in einen Feldboden,
- Einstellen einer Aufstandskraft (F) zur Beaufschlagung eines Säschars (2) einer Sämaschine (1) und/oder zur Einhaltung der eingestellten Ablagetiefe für Saatgut und/oder Fördergut in einen Feldboden,
- Erfassen eines hydraulischen oder pneumatischen Schardrucks (P) auf einen Säschar (2) einer Sämaschine (1) zur Erzeugung der eingestellten Aufstandskraft (F) und/oder zur Einhaltung der eingestellten Ablagetiefe für Saatgut und/oder Fördergut in einen Feldboden,
- Erfassen einer Aufstandskraft (F), mit welcher ein Säschar einer Sämaschine (1) tatsächlich beaufschlagt ist und/oder mit welcher die eingestellte Ablagetiefe für Saatgut und/oder Fördergut in einen Feldboden eingehalten und/oder kontrolliert werden kann,
- Bilden eines Verhältnisses von erfasstem Schardruck (P) zu erfasster Aufstandskraft (F), und
- Regeln des Schardrucks (P) anhand des gebildeten Verhältnisses.

2. Verfahren nach Anspruch 1,
- anhand des Verhältnisses Klassifizieren von mindestens einer Eigenschaft des Feldbodens, in welchem Saatgut und/oder Fördergut bei der eingestellten Ablagetiefe eingebracht wird,
- wobei das Klassifizieren von mindestens einer Eigenschaft des Feldbodens die mechanischen Eigenschaften des Feldbodens betrifft.

3. Verfahren nach Anspruch 2,
- wobei das Klassifizieren ein Auslesen eines Parametersatzes zur Regelung des Schardrucks (P) und/oder zur Regelung einer Schardruckeinrichtung (6) einer Sämaschine (1) für die geforderte Aufstandskraft (F) umfasst, um für den in Bearbeitung stehenden und/oder klassifizierten Feldboden, z. B. mit seiner mindestens einen Eigenschaft, eine optimale Druckversorgung durch eine Schardruckeinrichtung (6) einer Sämaschine (1) zu gewährleisten, sodass für jeden Feldboden die Auslenkungen eines Säschars (2) einer Sämaschine (1) minimierbar sind.

4. Verfahren nach einem der vorangehenden Ansprüche,
- Überspielen der mindestens einen klassifizierten Eigenschaft des Feldbodens und/oder des ausgelesenen Parametersatzes an eine Steuerungs- oder Regelungseinrichtung einer Sämaschine (1), wodurch die Steuerungs- oder Regelungseinrichtung mithilfe einer Schardruckeinrichtung (6) einer Sämaschine (1) den hydraulischen oder pneumatischen Schardruck (P) auf einen Säschar (2) einer Sämaschine (1) zur Erzeugung der eingestellten Aufstandskraft (F) und/oder zur Einhaltung der eingestellten Ablagetiefe für Saatgut und/oder Fördergut in einen Feldboden einstellt oder nachstellt.

5. Computer, Computersystem oder Computernetzwerk, welche dazu eingerichtet sind, lokal oder nicht-lokal das Verfahren nach einem der Ansprüche 1 bis 4 auszuführen.

6. Computerprogramm, umfassend Befehle, die bei der Ausführung des Programms durch einen Computer diesen veranlassen, das Verfahren nach einem der Ansprüche 1 bis 4 auszuführen.

7. Sämaschine (1) zum Ausbringen von körnigem Saatgut und/oder Fördergut in einen Feldboden aufweisend:
- einen Computer, ein Computersystem oder ein Computernetzwerk nach Anspruch 5, oder
- eine Schardruckeinrichtung (6) zur Erzeugung einer Aufstandskraft (F) auf einen Säschar (2) der Sämaschine (1),
- eine Steuerungs- oder Regelungseinrichtung zum Regeln der Aufstandskraft (F) mithilfe der Schardruckeinrichtung (6) und/oder mithilfe der Hydraulik- oder Pneumatikversorgung 4,
- wobei die Steuerungs- oder Regelungseinrichtung einen Computer, ein Computersystem oder ein Computernetzwerk nach Anspruch 5 aufweist.
